# EUROPEAN PATENT APPLICATION

(11) **EP 3 978 305 A1**
(43) Date of publication of application: **06.04.2022**
(21) Application number: 21199328.2
(22) Date of filing: 28.09.2021
(51) Int. Cl.: B60L 53/60, E01F 13/04, B60L 53/30, B60L 53/68, G06F 3/16, G10L 15/00

(54) **METHOD AND APPARATUS FOR CONTROLLING CHARGING PILE LOCK**

(30) Priority: 30.09.2020 CN 202011066482
(71) Applicant: Guangzhou Xiaopeng Motors Technology Co., Ltd., Guangzhou, Guangdong 510000 (CN)
(72) Inventor: Lun, Zhiyuan, Guangzhou, 510000 (CN)
(74) Representative: Habermann, Hruschka & Schnabel

(57) **Abstract**

The present disclosure provides a method and apparatus for controlling a charging pile lock, which are applied in a cloud server configured to communicate with a vehicle terminal. The method includes: receiving speech information and position information that are transmitted by the vehicle terminal; obtaining a charging pile lock control instruction by parsing the speech information; determining, based on the position information, a target charging pile over which the cloud server has a control permission; and controlling the target charging pile lock over which the cloud server has the control permission to execute the charging pile lock control instruction. Determining the target charging pile and controlling a target charging pile lock by using the speech information and the position information can realize both remote control of the lock of the charging pile outside a vehicle through a speech instruction and remote lock lowering in a commercial consumption region. In this way, the user can directly drive the vehicle into a charging position including the lock for charging, without getting off the vehicle.

## Description

### TECHNICAL FIELD

The present disclosure relates to the field of vehicle technologies, and more particularly, to a method for controlling a charging pile lock and an apparatus for controlling a charging pile lock.

### BACKGROUND

With the development of the electric vehicle industry, more and more charging piles are produced to meet the electricity demand of electric vehicles. Charging piles refer to charging devices that provide charging services for electric vehicles. The charging piles are mainly categorized into floor-standing charging piles and wall-mounted charging piles, and can take a charging method such as timing, electricity meter, and an amount of money. The charging piles (stations) can realize charging by timing, charging by electricity meter, and charging by an amount of money, and can be used as electricity purchase terminals. In addition, the efficiency and practicability of public charging piles (stations) can be improved.

However, when a vehicle owner in the consumer field drives into a commercial charging station, he/she needs to get off the vehicle to activate the charging pile and lower a lock of the charging pile before driving the vehicle into a charging position, and then get off the vehicle again to charge the vehicle. The experience is unfriendly and cumbersome.

### SUMMARY

In view of the above problems, embodiments of the present disclosure are proposed to provide a method for controlling a charging pile lock and an apparatus for controlling a charging pile lock, capable of overcoming the above problems or at least partially solving the above problems.

To solve the above problems, an embodiment of the present disclosure discloses a method for controlling a charging pile lock. The method is applied in a cloud server configured to communicate with a vehicle terminal. The method includes: receiving speech information and position information that are transmitted by the vehicle terminal; obtaining a charging pile lock control instruction by parsing the speech information; determining, based on the position information, a target charging pile over which the cloud server has a control permission, wherein the target charging pile corresponds to a target charging pile lock; and controlling the target charging pile lock over which the cloud server has the control permission to execute the charging pile lock control instruction.

Optionally, the cloud server includes a speech rule engine pre-deployed. Said obtaining the charging pile lock control instruction by parsing the speech information includes: transferring the speech information to the speech rule engine, wherein the speech rule engine is configured to parse the speech information and determine whether the parsed speech information includes a lock lowering intention; and generating a charging pile lock lowering instruction, when the parsed speech information includes the lock lowering intention.

Optionally, the cloud server includes a charging pile module. Said determining, based on the position information, the target charging pile over which the cloud server has the control permission includes: generating a charging pile lock lowering request based on the lock lowering intention, and determining a charging pile region where a vehicle is located; determining, based on the position information, whether the cloud serve has the control permission over a charging pile in the charging pile region where the vehicle is located; transmitting the charging pile lock lowering request to the charging pile module, when the cloud serve has the control permission over the charging pile in the charging pile region where the vehicle is located, wherein the charging pile module is configured to respond to the charging pile lock lowering request and determine whether a first available charging pile exists in the charging pile region; and determining the first available charging pile as the target charging pile, when the first available charging pile exists in the charging pile region.

Optionally, the cloud server is configured to communicate with a charging pile cloud server. Said controlling the target charging pile lock over which the cloud server has the control permission to execute the charging pile lock control instruction includes transmitting the charging pile lock lowering instruction to the charging pile cloud server. The charging pile cloud server is configured to perform a lock lowering operation on the target charging pile lock based on the charging pile lock lowering instruction.

Optionally, the charging pile cloud server is further configured to generate feedback information for the lock lowering operation. The feedback information includes a target charging position of the target charging pile. The method further includes receiving the feedback information transmitted by the charging pile cloud server, and transmitting the feedback information to the vehicle terminal. The feedback information includes lock lowering success information and lock lowering failure information. The lock lowering success information informs a user of using the target charging pile on which the lock lowering operation has been performed at the target charging position for charging.

Optionally, said transmitting the feedback information to the vehicle terminal includes: determining, by the charging pile module, whether a second available charging pile exists in the charging pile region, when the feedback information is the lock lowering failure information; and generating a charging pile lock lowering instruction for the found second available charging pile, and transmitting the charging pile lock lowering instruction for the second available charging pile to the charging pile cloud server, until receiving lock lowering success information for the second available charging pile transmitted by the charging pile cloud server.

Optionally, the method further includes: generating a charging inquiry request for the target charging pile, and transmitting the charging inquiry request to the charging pile cloud server, wherein the charging pile cloud server is further configured to respond to the charging inquiry request and generate charging reply information; receiving the charging reply information transmitted by the charging pile cloud server; and generating a charging pile lock raising instruction, when the charging reply information indicates that no charging is performed, and transmitting the charging pile lock raising instruction to the charging pile cloud server, wherein the charging pile cloud server is further configured to perform a lock raising operation on the target charging pile lock based on the charging pile lock raising instruction.

An embodiment of the present disclosure further provides an apparatus for controlling a charging pile lock. The apparatus is applied in a cloud server configured to communicate with a vehicle terminal. The apparatus includes: an information receiving module configured to receive speech information and position information that are transmitted by the vehicle terminal; a lock control instruction obtaining module configured to obtain a charging pile lock control instruction by parsing the speech information; a target charging pile determination module configured to determine, based on the position information, a target charging pile over which the cloud server has the control permission , wherein the target charging pile corresponds to a target charging pile lock; and a lock control module configured to control the target charging pile lock over which the cloud server has the control permission to execute the charging pile lock control instruction.

Optionally, the cloud server includes a speech rule engine pre-deployed. The lock control instruction obtaining module includes: a speech information transferring sub-module configured to transfer the speech information to the speech rule engine, wherein the speech rule engine is configured to parse the speech information and determine whether the parsed speech information includes a lock lowering intention; and a lock lowering instruction generation sub-module configured to generate a charging pile lock lowering instruction, when the parsed speech information includes the lock lowering intention.

Optionally, the cloud server includes a charging pile module. The target charging pile determination module includes: a lock lowering request generation sub-module configured to generate a charging pile lock lowering request based on the lock lowering intention; a charging pile permission determination sub-module configured to determine a charging pile region where a vehicle is located, and determine, based on the position information, whether the cloud serve has the control permission over a charging pile in the charging pile region where the vehicle is located; a lock lowering request transmission sub-module configured to transmit the charging pile lock lowering request to the charging pile module, when the cloud serve has the control permission over the charging pile in the charging pile region where the vehicle is located, wherein the charging pile module is configured to respond to the charging pile lock lowering request and determine whether a first available charging pile exists in the charging pile region; and a target charging pile determination sub-module configured to determine the first available charging pile as the target charging pile, when the first available charging pile exists in the charging pile region.

Optionally, the cloud server is configured to communicate with a charging pile cloud server. The lock control module includes a first lock lowering instruction transmission sub-module configured to transmit the charging pile lock lowering instruction to the charging pile cloud server. The charging pile cloud server is configured to perform a lock lowering operation on the target charging pile lock based on the charging pile lock lowering instruction.

Optionally, the charging pile cloud server is further configured to generate feedback information for the lock lowering operation. The feedback information includes a target charging position of the target charging pile. The apparatus further includes a feedback information returning module configured to receive the feedback information transmitted by the charging pile cloud server, and transmit the feedback information to the vehicle terminal. The feedback information includes lock lowering success information and lock lowering failure information. The lock lowering success information informs a user of using the target charging pile on which the lock lowering operation has been performed at the target charging position for charging.

Optionally, the feedback information returning module further includes: a second available charging pile determination sub-module configured to determine, by the charging pile module, whether a second available charging pile exists in the charging pile region, when the feedback information is the lock lowering failure information; and a second charging pile lock lowering instruction transmission sub-module configured to generate a charging pile lock lowering instruction for the found second available charging pile, and transmit the charging pile lock lowering instruction for the second available charging pile to the charging pile cloud server, until receiving lock lowering success information for the second available charging pile transmitted by the charging pile cloud server.

Optionally, the lock control instruction obtaining module further includes: a charging inquiry request transmission sub-module configured to generate a charging inquiry request for the target charging pile, and transmit the charging inquiry request to the charging pile cloud server, wherein the charging pile cloud server is further configured to respond to the charging inquiry request and generate charging reply information; a charging reply information receiving sub-module configured to receive the charging reply information transmitted by the charging pile cloud server; and a lock raising instruction transmission sub-module configured to generate a charging pile lock raising instruction, when the charging reply information indicates that no charging is performed, and transmit the charging pile lock raising instruction to the charging pile cloud server, wherein the charging pile cloud server is further configured to perform a lock raising operation on the target charging pile lock based on the charging pile lock raising instruction.

An embodiment of the present disclosure further discloses a vehicle. The vehicle includes the apparatus for controlling the charging pile lock, a processor, a memory, and a computer program stored on the memory and executable on the processor. The computer program, when executed by the processor, performs any of steps of the method for controlling the charging pile lock.

An embodiment of the present disclosure further discloses a computer-readable storage medium having a computer program stored thereon. The computer program, when executed by a processor, performs any of steps of the method for controlling the charging pile lock.

Embodiments of the present disclosure include the following advantages.

In the embodiments of the present disclosure, the method can be applied in the cloud server. The cloud server can communicate with the vehicle terminal. In the commercial consumption region, the cloud server can receive the speech information of a user and the position information that are collected and transmitted by the vehicle terminal. The speech information can be parsed to obtain the charging pile control instruction. The target charging pile over which the cloud server has the control permission can be determined based on the position information, so as to control the determined target charging pile over which the cloud server has the control permission to execute the charging pile lock control instruction. Determining the target charging pile and controlling the target charging pile lock by using the speech information and the position information can realize both remote control of the lock of the charging pile outside a vehicle through a speech instruction and remote lock lowering in a commercial consumption region. In this way, the user can directly drive the vehicle into a charging position including the lock for charging, without getting off the vehicle.

### BRIEF DESCRIPTION OF DRAWINGS

FIG. 1 is a flowchart illustrating a method for controlling a charging pile lock in the related art;
FIG. 2 is a flowchart illustrating steps of a method for controlling a charging pile lock according to the present disclosure;
FIG. 3 is a flowchart illustrating steps of a method for controlling a charging pile lock according to the present disclosure;
FIG. 4 is a flowchart illustrating a method for controlling a charging pile lock according to an embodiment of the present disclosure;
FIG. 5 is a block diagram showing a structure of an apparatus for controlling a charging pile lock according to the present disclosure; and
FIG. 6 is a block diagram showing a structure of an apparatus for controlling a charging pile lock according to the present disclosure.

### DESCRIPTION OF EMBODIMENTS

In order to make the above objectives, features and advantages of the present disclosure more obvious and understandable, the present disclosure will be further described in detail below with reference to the accompanying drawings and specific embodiments.

Types of charging piles can be categorized into a type of household charging piles and a type of commercial charging piles. For a simple household charging pile, it can be associated with all owners or a certain fixed owner of some community. A lock of the household charging pile can be controlled through information of one or more associated owners established in advance. In a commercial consumption region, unlike household charging piles of which charging objects are only owners of a certain community, commercial charging piles face charging objects of higher mobility. It is difficult to pre-associate a commercial charging pile with information of a certain fixed vehicle owner and control the lock of the commercial charging pile.

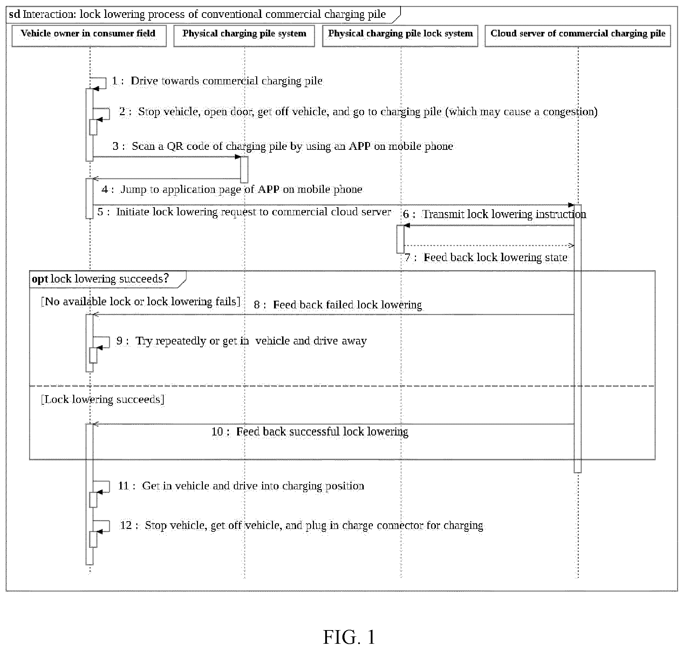

FIG. 1 is a flowchart illustrating a method for controlling a charging pile lock in the related art. Referring to FIG. 1, when a vehicle owner in the consumer field drives into a commercial charging station, the vehicle owner needs to stop the vehicle, open the door, get off the vehicle, and go to the charging pile. The vehicle owner may use an application (APP) on a mobile phone to scan a Quick Response (QR) code of the charging pile to jump to an application page for a physical charging pile system of the APP on the mobile phone. The vehicle owner can initiate a lock lowering request to a cloud server of the commercial charging pile. The cloud server of the commercial charging pile can generate a lock lowering instruction and transmit the lock lowering instruction to a physical charging pile lock system to perform a lock lowering operation on a lock of the charging pile corresponding to the QR code. The physical charging pile lock system can feed back a lock lowering state to the cloud server of the commercial charging pile. The cloud server of the commercial charging pile can feed back feedback of the lock lowering state to the mobile phone of the vehicle owner in the consumer field who initiated the lock lowering request. After receiving the feedback of the lock lowering state, the mobile phone can determine whether the lock is successfully lowered. When no lock exists or lowering of the lock fails, the feedback of the lock lowering state is failed lock lowering. The vehicle owner in the consumer field can repeatedly initiate the lock lowering request on the application page to try to lower the lock, or get in the vehicle and drive away. When the lock is successfully lowered, the feedback of the lock lowering state is successful lock lowering. Therefore, the vehicle owner in the consumer field can get on the vehicle to drive into a charging position with the lock lowered, stop the vehicle again, get off the vehicle, and plug in a charge connector to charge the vehicle.

For lock lowering of the charging pile in a conventional commercial consumption region, the vehicle owner in the consumer field needs to drive the vehicle into the commercial charging station. Then, the vehicle owner needs to get off the vehicle for activating the charging pile and lowering the lock, move the vehicle into the charging position, and get off the vehicle again for charging, such that the experience is extremely unfriendly and cumbersome. Such a conventional mode has the following disadvantages: the vehicle owner has to get off the vehicle to approach a charging pile to perform operations such as scanning a code and lowering a lock; it is impossible for the vehicle owner to know whether there is an available charging pile on the vehicle; and only when a code scanning interaction is performed can the vehicle owner know whether the charging pile is a faulty pile.

Based on the above problems, one of the core concepts of the embodiments of the present disclosure is to determine a target charging pile and control a target charging pile lock through speech information of a user and position information of the vehicle, so as to realize remote control of a charging pile outside the vehicle through speech instructions in the commercial consumption region. In this way, the user may directly drive the vehicle into a charging position containing a lock for charging without getting off the vehicle.

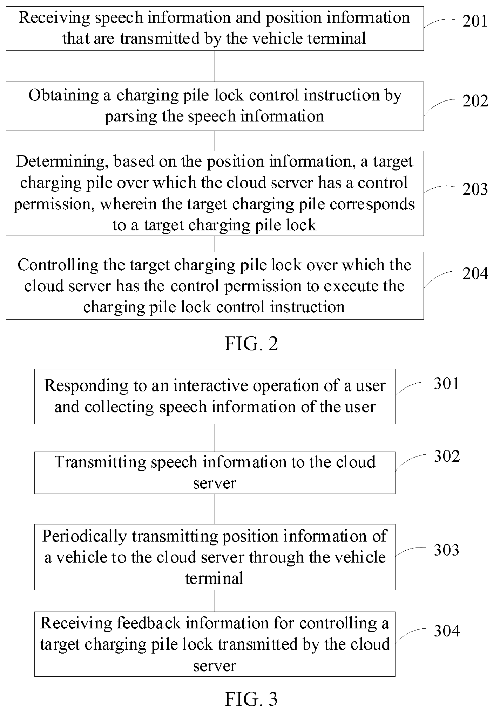

FIG. 2 is a flowchart illustrating steps of a method for controlling a charging pile lock according to the present disclosure. The method can be applied in a cloud server which communicates with a vehicle terminal. Specifically, the method can include the following steps.

In step 201, speech information and position information that are transmitted by the vehicle terminal are received.

In an embodiment of the present disclosure, in the commercial consumption region, the cloud server can receive the speech information and position information that are transmitted by the vehicle terminal, so as to control a lock of a charging pile in the commercial charging station based on the received speech information and position information.

It should be noted that a terminal which communicates with the cloud server may not only be the vehicle terminal of the vehicle owner in the consumer field, but also a mobile phone terminal of the vehicle owner in the consumer field, and the embodiments of the present disclosure are not limited to this.

In practical applications, the speech information received by the cloud server may be user speech information collected by the vehicle terminal. Specifically, the vehicle terminal may respond to an interactive operation of the vehicle owner and collect the user speech information. The cloud server corresponding to the vehicle terminal may be a server corresponding to a vehicle-mounted terminal system. The interactive operation of the vehicle owner may refer to a speech instruction or a speech interactive operation of the vehicle owner.

In a preferred embodiment, the received position information may be periodically transmitted to the cloud server through the vehicle terminal. The period can be set as required. In addition to obtaining the position information of the vehicle by periodically transmitting the position information through the vehicle terminal, the position information of the vehicle may also be carried in the received user speech information transmitted by the vehicle terminal, or obtained by the cloud server through a charging pile module, and the embodiments of the present disclosure are not limited to this.

In step 202, a charging pile lock control instruction is obtained by parsing the speech information.

In an embodiment of the present disclosure, after receiving the collected user speech information transmitted by the vehicle terminal, the cloud server may parse the speech information to obtain the charging pile lock control instruction based on parsed speech data.

The cloud server may include a speech rule engine pre-deployed. The speech rule engine may include a speech model that is pre-trained. The speech model may be used to parse the speech information. The received speech information can be transferred to the speech rule engine, such that the speech rule engine can parse the speech information and determine whether the parsed speech information includes a lock lowering intention. When the parsed speech information includes the lock lowering intention, a charging pile lock lowering instruction can be generated, such that a lock lowering operation can be performed on the charging pile in a charging station through the generated charging pile lock lowering instruction.

As an example, the received user speech information of can support different semantic meanings, e.g., "I want to lower the lock", "charge the vehicle and lower the lock", and "lower the lock of the charging pile". The speech information parsed by the speech rule engine can include lock lowering, which means that the lock lowering intention exists.

In step 203, a target charging pile over which the cloud server has a control permission is determined based on the position information. The target charging pile corresponds to a target charging pile lock.

After receiving the position information of the vehicle transmitted by the vehicle terminal, the cloud server can determine the target charging pile over which the cloud server has the control permission based on the position information, so as to control the determined target charging pile by using the generated charging pile lock control instruction.

In an embodiment of the present disclosure, step 203 may include the following substeps.

In sub-step S11, a charging pile region where a vehicle is located is determined.

In practical applications, commercial charging stations may include different types of charging piles and cover different charging pile regions. Charging piles of the same type can be located in the same charging region. A corresponding charging pile region can be determined based on the received position information.

In sub-step S 12, a target charging pile is determined based on the charging pile region.

After determining that the user speech information of the includes the lock lowering intention, a charging pile lock lowering request can be generated based on the lock lowering intention.

The types of charging piles in commercial charging stations can include self-operated piles, franchised piles, and probably, household piles. Different types of charging piles can be distinguished based on the determined charging pile region to determine whether the vehicle has the control permission over the charging pile in the charging pile region.

In an embodiment of the present disclosure, the cloud server may include the charging pile module. A manner for determining the target charging pile may be described below. Specifically, it can be determined based on the position information whether the cloud server has the control permission over the charging pile in the charging pile region where the vehicle is located. When the cloud server has the control permission over the charging pile in the charging pile region where the vehicle is located, the generated charging pile lock lowering request may be transmitted to the charging pile module. The charging pile module can respond to the received charging pile lock lowering request, and determine whether a first available charging pile exists in the charging pile region. When the first available charging pile exists in the charging pile region, the first available charging pile may be determined as the target charging pile.

In step 204, the target charging pile over which the cloud server has the control permission is controlled to execute the charging pile lock control instruction.

After the target charging pile is determined, the charging pile lock control instruction previously generated based on the lock lowering intention can be obtained, so as to control the target charging pile lock in accordance with the charging pile lock control instruction. That is, the target charging pile over which the cloud server has the control permission is controlled to execute the charging pile lock control instruction.

The cloud server can communicate with a charging pile cloud server. The charging pile cloud server can control the charging pile lock. The charging pile cloud server can control the charging pile lock in accordance with the charging pile lock control instruction generated by the cloud server, such that the vehicle owner in the consumer field can drive the vehicle into the target charging pile for charging.

In a case, when the charging pile lock control instruction is the charging pile lock lowering instruction, the cloud server can transmit the charging pile lock lowering instruction to the charging pile cloud server, such that the charging pile cloud server can control the target charging pile lock to execute the charging pile lock lowering instruction. That is, the lock lowering operation may be performed on the target charging pile lock.

In a preferred embodiment, the charging pile lock control instruction may also include a charging pile lock raising instruction.

Specifically, when time for the cloud server to return feedback information to the vehicle terminal reaches a predetermined time threshold, i.e., in response to a timeout, the cloud server can actively inquire the charging pile cloud server whether a vehicle is driven to the target charging position and charged with the target charging pile. Specifically, a charging inquiry request for the target charging pile can be generated, and the charging inquiry request can be transmitted to the charging pile cloud server. The charging pile cloud server can be configured to respond to the charging inquiry request, generate charging reply information, and transmit the charging reply information to the cloud server. The cloud server can receive the charging reply information transmitted by the charging pile cloud server. When the received charging reply information indicates that no charging is performed, the charging pile lock raising instruction can be generated, and the charging pile lock raising instruction can be transmitted to the charging pile cloud server. In this way, the charging pile cloud server can perform a lock raising operation on the target charging pile lock based on the charging pile lock raising instruction.

In a preferred embodiment, the charging pile cloud server may be configured to perform the lock lowering operation on the target charging pile lock based on the charging pile lock lowering instruction, and generate feedback information for the lock lowering operation. The cloud server can receive the feedback information obtained after the charging pile cloud server controls, based on the lock lowering instruction, the target charging pile lock, and return the feedback information to the vehicle terminal. The feedback information may include lock lowering success information and lock lowering failure information. Both the lock lowering success information and the lock lowering failure information may include the target charging position of the target charging pile.

In a case, when the feedback information is the lock lowering success information and the cloud server is predetermined to return the lock lowering success information to the vehicle terminal, the user can be notified through the vehicle terminal that the vehicle can be driven into the target charging position of the target charging pile, and charged by the target charging pile that is lowered.

In a preferred embodiment, in addition to the target charging position of the target charging pile included in the feedback information, a current position of the vehicle can also be transmitted to a planned route of the target charging position. When the vehicle is gradually driven to the target charging position by following the planned route, a distance between the current position of the vehicle and the target charging position can be detected in real time through Bluetooth detection between the target charging pile and the vehicle-mounted terminal or mobile terminal.

In another case, when the feedback information is the lock lowering failure information, random lock lowering can be tried repeatedly until a suitable charging pile exists (the suitable charging pile can be determined as the target charging pile), and the lock lowering operation can be performed. Specifically, the charging pile module can respond to the charging pile lock lowering request again, and it is continued to determine whether a second available charging pile exists in the charging pile region. When the second available charging pile exists, it is continued to generate a charging pile lock lowering instruction for the found second available charging pile, and continued to transmit the charging pile lock lowering instruction for the second available charging pile to the charging pile cloud server, until receiving the lock lowering success information for the second available charging pile transmitted by the charging pile cloud server.

In the embodiments of the present disclosure, the method can be applied in the cloud server. The cloud server can communicate with the vehicle terminal. In the commercial consumption region, the cloud server can receive the speech information of the user and the position information that are collected and transmitted by the vehicle terminal. The speech information can be parsed to obtain the charging pile control instruction. The target charging pile over which the cloud server has the control permission can be determined based on the position information, so as to control the determined target charging pile over which the cloud server has the control permission to execute the charging pile lock control instruction. Determining the target charging pile and controlling the target charging pile lock by using the speech information and the position information can realize both remote control of the lock of the charging pile outside the vehicle through the speech instruction and remote lock lowering in the commercial consumption region. In this way, the user can directly drive the vehicle into the charging position including the lock for charging, without getting off the vehicle.

FIG. 3 is a flowchart illustrating steps of a method for controlling a charging pile lock according to the present disclosure. The method can be applied in the vehicle terminal which communicates with the cloud server. Specifically, the method can include the following steps.

In step 301, a response is made to an interactive operation of a user, and speech information of the user is collected.

In an embodiment of the present disclosure, in the commercial consumption region, the vehicle terminal can be configured to respond to the interactive operation of the user and collect the speech information of the user, so as to transmit the collected speech information to the cloud server.

The vehicle terminal of the vehicle owner in the consumer field can respond to the interactive operation of the vehicle owner and collect the speech information of the user. The cloud server receiving the speech information may be a server corresponding to the vehicle-mounted terminal system. It should be noted that the terminal can also be the mobile phone terminal of the vehicle owner in the consumer field. When the terminal is the mobile phone terminal of the vehicle owner in the consumer field, the mobile phone terminal can collect the speech data of the user through the APP on the mobile phone, and a cloud server corresponding to the mobile phone terminal can be the charging pile cloud server.

In step 302, the speech information is transmitted to a cloud server.

After collecting the speech information of the user, the vehicle terminal can transmit the speech information to the cloud server, such that the cloud server can generate the charging pile lock control instruction based on the received speech information.

Specifically, the cloud server can be configured to parse the speech information through the speech rule engine pre-deployed. If the parsed speech information includes the lock lowering intention, the charging pile lock lowering instruction can be generated to control the lock of the charging pile.

In step 303, position information of a vehicle is periodically transmitted to the cloud server through the vehicle terminal.

The vehicle terminal can be configured to transmit the position information of the vehicle to the cloud server, such that the cloud server can determine, based on the received position information, the target charging pile over which the cloud server has the control permission. In this way, the target charging pile lock over which the cloud server has the control permission can be controlled to execute the charging pile lock control instruction.

Specifically, when it is determined whether the vehicle owner in the consumer field has the control permission over the charging pile in the charging pile region corresponding to the current position of the vehicle, the charging pile module can search for an available charging pile in the charging pile region, and transmit the generated charging pile lock lowering instruction to the charging pile cloud server to perform the lock lowering operation on the lock of the available charging pile.

In step 304, feedback information for controlling a target charging pile lock transmitted by the cloud server is received.

After the charging pile cloud server performs the lock lowering operation on the lock of the available charging pile (i.e., the target charging pile) based on the charging pile lock lowering instruction transmitted by the cloud server, the feedback information for controlling the target charging pile lock transmitted by the cloud server can be received. When the received feedback information is the lock lowering success information, the vehicle owner in the consumer field can drive the vehicle into the target charging position carried in the received feedback information, stop the vehicle, get off the vehicle, and plug in the charge connector to charge the vehicle.

In an embodiment of the present disclosure, the method can be applied in the vehicle terminal. The vehicle terminal can communicate with the cloud server. In the commercial consumption region, the terminal can respond to the interactive operation of the user, collect the user speech information, and transmit the collected user speech information to the cloud server, such that the cloud server can generate the charging pile lock control instruction based on the received user speech information and determine the target charging pile based on the position information, thereby controlling the determined target charging pile lock to execute the charging pile lock control instruction, and receiving the feedback information for controlling the target charging pile lock. Determining the target charging pile and controlling the target charging pile lock by using the user speech information and the position information can realize both the remote control of the lock of the charging pile outside the vehicle through the speech instruction and the remote lock lowering in the commercial consumption region. In this way, the user can directly drive the vehicle into the charging position including the lock for charging, without getting off the vehicle.

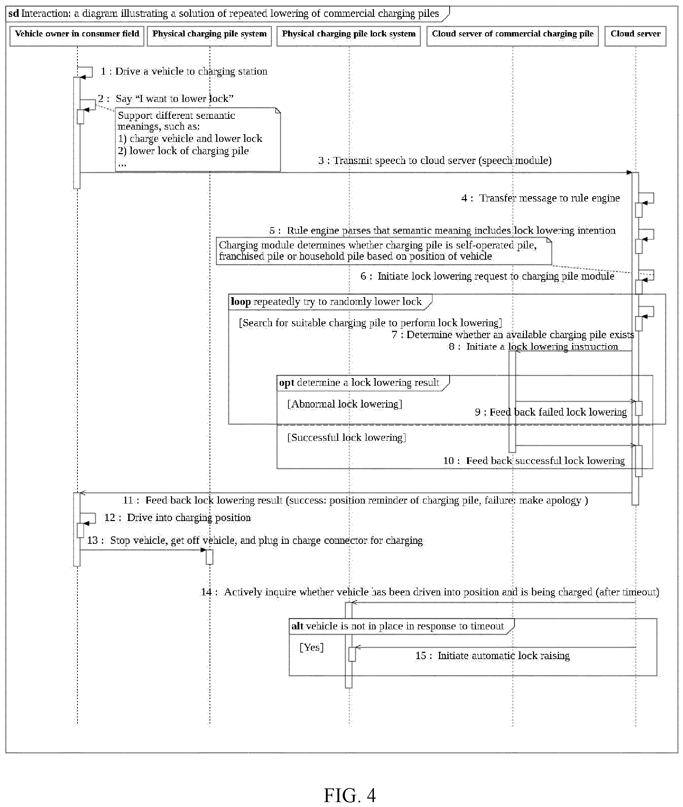

FIG. 4 is a flowchart illustrating a method for controlling a charging pile lock according to an embodiment of the present disclosure. In the commercial consumption region, the lock of the commercial charging pile outside the vehicle can be remotely controlled by speech instructions to be lowered remotely. When driving into the commercial charging station, the vehicle owner in the consumer field can give a speech instruction such as "I want to lower the lock". A speech module of a screen of the vehicle-mounted terminal can collect speech data of the user, and transmit the speech data to the cloud server. The cloud server can transfer messages to the rule engine. The rule engine can parse a semantic meaning of the speech data. If the semantic meaning of the parsed speech data indicates the lock lowering intention, the lock lowering request can be initiated to the charging pile module. The charging pile module can randomly and repeatedly determine whether an available charging pile exists. When an available charging pile exists, the lock lowering instruction can be initiated to the cloud server of the commercial charging pile. When the lock lowering fails, a lock lowering failure message can be fed back to the cloud server, e.g., making an apology to failed lock lowering. When the lock lowering succeeds, a lock lowering success message can be fed back to the cloud server, e.g., position reminder information of the charging pile.

When the lock lowering fails, the charging pile module can be configured to repeatedly determine whether an available charging pile exists, and repeatedly transmit the lock lowering instruction to an available charging pile found at random, until the lock lowering succeeds. When the lock lowering succeeds, the cloud server can return the feedback information to the terminal and inform the vehicle owner in the consumer field that he/she can drive into the charging position. Therefore, the vehicle owner in the consumer field can stop the vehicle, get off the vehicle, and plug in the charge connector to charge the vehicle.

In a case of the timeout, the cloud server can also actively inquire the cloud server of the commercial charging pile whether a vehicle has been driven into the charging position and is being charged. If no vehicle is being charged, the cloud server can initiate an automatic lock raising instruction to the cloud server of the commercial charging pile to perform the lock raising operation on the lock that has been lowered in advance.

In the embodiments of the present disclosure, the method can be applied in the cloud server. The cloud server can communicate with the vehicle terminal. In the commercial consumption region, the cloud server can receive the speech information of the user and the position information that are collected and transmitted by the vehicle terminal. The speech information can be parsed to obtain the charging pile control instruction. The target charging pile over which the cloud server has the control permission can be determined based on the position information, so as to control the determined target charging pile over which the cloud server has the control permission to execute the charging pile lock control instruction. Determining the target charging pile and controlling the target charging pile lock by using the speech information and the position information can realize both remote control of the lock of the charging pile outside the vehicle through the speech instruction and remote lock lowering in the commercial consumption region. In this way, the user can directly drive the vehicle into the charging position including the lock for charging, without getting off the vehicle.

It should be noted that, in order to simplify description of the present disclosure, method embodiments of the present disclosure are expressed as a series of action combinations, but it would be appreciated by those skilled in the art that the embodiments of the present disclosure are not limited to the order of the actions, for the reason that according to embodiments of the present disclosure, some steps may be executed in other orders or be executed at the same time. In addition, it would be further appreciated by those skilled in the art that embodiments described in the specification are preferred embodiments, and actions involved therein may not be necessary for the embodiments of the present disclosure.

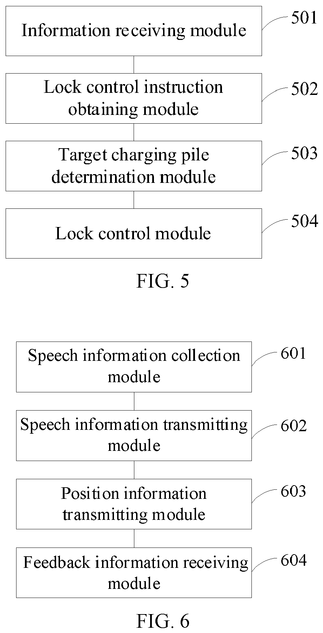

FIG. 5 is a block diagram showing a structure of an apparatus for controlling a charging pile lock according to the present disclosure. The apparatus can be applied in the cloud server which communicates with the vehicle terminal. Specifically, the apparatus can include an information receiving module 501, a lock control instruction obtaining module 502, a target charging pile determination module 503, and a lock control module 504.

The information receiving module 501 can be configured to receive speech information and position information that are transmitted by the vehicle terminal.

The lock control instruction obtaining module 502 can be configured to obtain a charging pile lock control instruction by parsing the speech information.

The target charging pile determination module 503 can be configured to determine, based on the position information, a target charging pile over which the cloud server has the control permission. The target charging pile can correspond to a target charging pile lock.

The lock control module 504 can be configured to control the target charging pile lock over which the cloud server has the control permission to execute the charging pile lock control instruction.

In an embodiment of the present disclosure, the cloud server can include a speech rule engine pre-deployed. The lock control instruction obtaining module 502 can include a speech information transferring sub-module and a lock lowering instruction generation sub-module.

The speech information transferring sub-module can be configured to transfer the speech information to the speech rule engine. The speech rule engine can be configured to parse the speech information and determine whether the parsed speech information includes a lock lowering intention.

The lock lowering instruction generation sub-module can be configured to generate a charging pile lock lowering instruction, when the parsed speech information includes the lock lowering intention.

In an embodiment of the present disclosure, the cloud server can include a charging pile module. The target charging pile determination module 503 can include a lock lowering request generation sub-module, a charging pile permission determination sub-module, a lock lowering request transmission sub-module, and a target charging pile determination sub-module.

The lock lowering request generation sub-module can be configured to generate a charging pile lock lowering request based on the lock lowering intention.

The charging pile permission determination sub-module can be configured to determine a charging pile region where a vehicle is located, and determine, based on the position information, whether the cloud serve has the control permission over a charging pile in the charging pile region where the vehicle is located.

The lock lowering request transmission sub-module can be configured to transmit the charging pile lock lowering request to the charging pile module, when the cloud serve has the control permission over the charging pile in the charging pile region where the vehicle is located. The charging pile module can be configured to respond to the charging pile lock lowering request and determine whether a first available charging pile exists in the charging pile region.

The target charging pile determination sub-module can be configured to determine the first available charging pile as the target charging pile, when the first available charging pile exists in the charging pile region.

In an embodiment of the present disclosure, the cloud server can communicate with a charging pile cloud server. The lock control module 504 can include a first lock lowering instruction transmission sub-module.

The first lock lowering instruction transmission sub-module can be configured to transmit the charging pile lock lowering instruction to the charging pile cloud server. The charging pile cloud server can be configured to perform a lock lowering operation on the target charging pile lock based on the charging pile lock lowering instruction.

In an embodiment of the present disclosure, the charging pile cloud server can be further configured to generate feedback information for the lock lowering operation. The feedback information can include a target charging position of the target charging pile. The apparatus can further include a feedback information returning module.

The feedback information returning module can be configured to receive the feedback information transmitted by the charging pile cloud server, and transmit the feedback information to the vehicle terminal. The feedback information can include lock lowering success information and lock lowering failure information. The lock lowering success information can inform a user of using the target charging pile on which the lock lowering operation has been performed at the target charging position for charging.

In an embodiment of the present disclosure, the feedback information returning module can further include a second available charging pile determination sub-module and a second charging pile lock lowering instruction transmission sub-module.

The second available charging pile determination sub-module can be configured to determine, by the charging pile module, whether a second available charging pile exists in the charging pile region, when the feedback information is the lock lowering failure information.

The second charging pile lock lowering instruction transmission sub-module can be configured to generate a charging pile lock lowering instruction for the found second available charging pile, and transmit the charging pile lock lowering instruction for the second available charging pile to the charging pile cloud server, until receiving lock lowering success information for the second available charging pile transmitted by the charging pile cloud server.

In an embodiment of the present disclosure, the lock control instruction obtaining module can further include a charging inquiry request transmission sub-module, a charging reply information receiving sub-module, and a lock raising instruction transmission sub-module.

The charging inquiry request transmission sub-module can be configured to generate a charging inquiry request for the target charging pile, and transmit the charging inquiry request to the charging pile cloud server. The charging pile cloud server can be further configured to respond to the charging inquiry request and generate charging reply information.

The charging reply information receiving sub-module can be configured to receive the charging reply information transmitted by the charging pile cloud server.

The lock raising instruction transmission sub-module can be configured to generate a charging pile lock raising instruction, when the charging reply information indicates that no charging is performed, and transmit the charging pile lock raising instruction to the charging pile cloud server. The charging pile cloud server can be further configured to perform a lock raising operation on the target charging pile lock based on the charging pile lock raising instruction.

FIG. 6 is a block diagram showing a structure of an apparatus for controlling a charging pile lock according to the present disclosure. The apparatus can be applied in the terminal device which communicates with the cloud server. Specifically, the apparatus can include a speech information collection module 601, a speech information transmitting module 602, a position information transmitting module 603, and a feedback information receiving module 604.

The speech information collection module 601 can be configured to respond to an interactive operation of a user and collect speech information of the user.

The speech information transmitting module 602 can be configured to transmit speech data to the cloud server. The cloud server can be configured to generate a charging pile lock control instruction based on the speech information.

The position information transmitting module 603 can be configured to periodically transmit position information of a vehicle to the cloud server through the vehicle terminal. The cloud server can be configured to determine, based on the position information, the target charging pile over which the cloud server has control permission, so as to control the target charging pile over which the cloud server has the control permission to execute the charging pile lock control instruction.

The feedback information receiving module 604 can be configured to receive feedback information for controlling a target charging pile lock transmitted by the cloud server.

Since the apparatus embodiments are basically similar to the method embodiments, the description of the apparatus embodiments is relatively simple. For related description, reference may be made to a corresponding part of the description of the method embodiments.

In an embodiment of the present disclosure, a vehicle is provided. The vehicle includes the apparatus for controlling the charging pile lock as described above, a processor, a memory, and a computer program stored on the memory and executable on the processor. The computer program, when executed by the processor, performs procedures of the embodiments of the method for controlling the charging pile lock as described above, and can achieve the same technical effect. To avoid repetition, details thereof will be omitted here.

In an embodiment of the present disclosure, a computer-readable storage medium is provided. The computer-readable storage medium stores a computer program. The computer program, when executed by a processor, performs procedures of the embodiments of the method for controlling the charging pile lock as described above, and can achieve the same technical effect. To avoid repetition, details thereof will be omitted here.

Each embodiment in the specification is described in a progressive manner. Each embodiment focuses on differences from other embodiments. The same or similar parts of various embodiments can be referred to each other.

Those skilled in the art should understand that the embodiments of the present disclosure can be provided as a method, an apparatus, or a computer program product. Therefore, the embodiments of the present disclosure may adopt a form of a complete hardware embodiment, a complete software embodiment, or an embodiment combining software and hardware. In addition, the embodiments of the present disclosure may adopt a form of a computer program product implemented on one or more computer-usable storage media (including but not limited to disk storage, Compact Disc Read-Only Memory (CD-ROM), optical storage, etc.) including computer-usable program codes.

The embodiments of the present disclosure are described with reference to flowcharts and/or block diagrams of the method, the terminal device (system), and the computer program product according to the embodiments of the present disclosure. It should be understood that each process and/or block in the flowcharts and/or block diagrams, and a combination of processes and/or blocks in the flowcharts and/or block diagrams can be realized by computer program instructions. These computer program instructions can be provided to a processor of a general-purpose computer, a special-purpose computer, an embedded processor, or other programmable data processing terminal device to generate a machine, such that instructions executed by the processor of the computer or other programmable data processing terminal devices generate an apparatus for implementing functions specified in one or more processes in the flowchart and/or one or more blocks in the block diagram.

These computer program instructions can also be stored in a computer-readable memory that can guide a computer or other programmable data processing terminal devices to work in a specific manner, such that instructions stored in the computer-readable memory produce an article of manufacture including an instruction device. The instruction device implements functions specified in one or more processes in the flowchart and/or one or more blocks in the block diagram.

These computer program instructions can also be loaded on a computer or other programmable data processing terminal devices to enable a series of operation steps to be executed on the computer or other programmable terminal devices for producing computer-implemented processing, such that instructions executed on the computer or other programmable terminal devices provide steps for implementing functions specified in one or more processes in the flowchart and/or one or more blocks in the block diagram.

Although the preferred embodiments of the embodiments of the present disclosure have been described, those skilled in the art can make additional changes and modifications to these embodiments once they learn the basic creative concept. Therefore, the attached claims are intended to be interpreted as including the preferred embodiments and all changes and modifications falling within the scope of the embodiments of the present disclosure.

Further, It should be noted that relational terms herein, such as "first" and "second", are used only for differentiating one entity or operation from another entity or operation, which, however do not necessarily require or imply that there should be any real relationship or sequence between the entities or operations. Also, terms "comprise", "include" or any other variations thereof are meant to cover non-exclusive including, such that the process, method, article or terminal device including a series of elements do not only include those elements, but also include other elements that are not explicitly listed, or also include inherent elements of the process, method, article or terminal device. In a case that there are no more restrictions, an element qualified by the statement "comprises a ..." does not exclude the presence of additional identical elements in the process, method, article or terminal device that includes the said element.

The above provides detailed description of the method and apparatus for controlling the charging pile lock provided by the present disclosure. Specific examples are used herein to illustrate the principles and implementations of the present disclosure. The description of the above embodiments is only used to facilitate understanding of the method and a core idea thereof of the present disclosure. In addition, for those skilled in the art, according to the concept of the present disclosure, changes can be made to the specific implementations and the scope of application. In summary, the content of the specification should not be construed as a limitation to the present disclosure.

## Claims

1. A method for controlling a charging pile lock, applied in a cloud server configured to communicate with a vehicle terminal, the method comprising:
receiving speech information and position information that are transmitted by the vehicle terminal;
obtaining a charging pile lock control instruction by parsing the speech information;
determining, based on the position information, a target charging pile over which the cloud server has a control permission, wherein the target charging pile corresponds to a target charging pile lock; and
controlling the target charging pile lock over which the cloud server has the control permission to execute the charging pile lock control instruction.

2. The method according to claim 1, wherein the cloud server comprises a speech rule engine pre-deployed, and said obtaining the charging pile lock control instruction by parsing the speech information comprises:
transferring the speech information to the speech rule engine, wherein the speech rule engine is configured to parse the speech information and determine whether the parsed speech information comprises a lock lowering intention; and
generating a charging pile lock lowering instruction, when the parsed speech information comprises the lock lowering intention.

3. The method according to claim 2, wherein the cloud server comprises a charging pile module, and said determining, based on the position information, the target charging pile over which the cloud server has the control permission comprises:
generating a charging pile lock lowering request based on the lock lowering intention, and determining a charging pile region where a vehicle is located;
determining, based on the position information, whether the cloud serve has the control permission over a charging pile in the charging pile region where the vehicle is located;
transmitting the charging pile lock lowering request to the charging pile module, when the cloud serve has the control permission over the charging pile in the charging pile region where the vehicle is located, wherein the charging pile module is configured to respond to the charging pile lock lowering request and determine whether a first available charging pile exists in the charging pile region; and
determining the first available charging pile as the target charging pile, when the first available charging pile exists in the charging pile region.

4. The method according to claim 3, wherein the cloud server is configured to communicate with a charging pile cloud server, and said controlling the target charging pile lock over which the cloud server has the control permission to execute the charging pile lock control instruction comprises:
transmitting the charging pile lock lowering instruction to the charging pile cloud server, wherein the charging pile cloud server is configured to perform a lock lowering operation on the target charging pile lock based on the charging pile lock lowering instruction.

5. The method according to claim 4, wherein the charging pile cloud server is further configured to generate feedback information for the lock lowering operation, the feedback information comprises a target charging position of the target charging pile, and the method further comprises:
receiving the feedback information transmitted by the charging pile cloud server, and transmitting the feedback information to the vehicle terminal, wherein the feedback information comprises lock lowering success information and lock lowering failure information, and the lock lowering success information informs a user of using the target charging pile on which the lock lowering operation has been performed at the target charging position for charging.

6. The method according to claim 5, wherein said transmitting the feedback information to the vehicle terminal comprises:
determining, by the charging pile module, whether a second available charging pile exists in the charging pile region, when the feedback information is the lock lowering failure information; and
generating a charging pile lock lowering instruction for the found second available charging pile, and transmitting the charging pile lock lowering instruction for the second available charging pile to the charging pile cloud server, until receiving lock lowering success information for the second available charging pile transmitted by the charging pile cloud server.

7. The method according to claim 5, further comprising:
generating a charging inquiry request for the target charging pile, and transmitting the charging inquiry request to the charging pile cloud server, wherein the charging pile cloud server is further configured to respond to the charging inquiry request and generate charging reply information;
receiving the charging reply information transmitted by the charging pile cloud server; and
generating a charging pile lock raising instruction, when the charging reply information indicates that no charging is performed, and transmitting the charging pile lock raising instruction to the charging pile cloud server, wherein the charging pile cloud server is further configured to perform a lock raising operation on the target charging pile lock based on the charging pile lock raising instruction.

8. An apparatus for controlling a charging pile lock, applied in a cloud server configured to communicate with a vehicle terminal, the apparatus comprising:
an information receiving module configured to receive speech information and position information that are transmitted by the vehicle terminal;
a lock control instruction obtaining module configured to obtain a charging pile lock control instruction by parsing the speech information;
a target charging pile determination module configured to determine, based on the position information, a target charging pile over which the cloud server has the control permission , wherein the target charging pile corresponds to a target charging pile lock; and
a lock control module configured to control the target charging pile lock over which the cloud server has the control permission to execute the charging pile lock control instruction.

9. The apparatus according to claim 8, wherein the cloud server comprises a speech rule engine pre-deployed, and the lock control instruction obtaining module is further configured to:
transfer the speech information to the speech rule engine, wherein the speech rule engine is configured to parse the speech information and determine whether the parsed speech information comprises a lock lowering intention; and
generate a charging pile lock lowering instruction, when the parsed speech information comprises the lock lowering intention.

10. The apparatus according to claim 9, wherein the cloud server comprises a charging pile module, and the target charging pile determination module comprises:
a lock lowering request generation sub-module configured to generate a charging pile lock lowering request based on the lock lowering intention;
a charging pile permission determination sub-module configured to determine a charging pile region where a vehicle is located, and determine, based on the position information, whether the cloud serve has the control permission over a charging pile in the charging pile region where the vehicle is located;
a lock lowering request transmission sub-module configured to transmit the charging pile lock lowering request to the charging pile module, when the cloud serve has the control permission over the charging pile in the charging pile region where the vehicle is located, wherein the charging pile module is configured to respond to the charging pile lock lowering request and determine whether a first available charging pile exists in the charging pile region; and
a target charging pile determination sub-module configured to determine the first available charging pile as the target charging pile, when the first available charging pile exists in the charging pile region.

11. The apparatus according to claim 10, wherein the cloud server is configured to communicate with a charging pile cloud server, and the lock control module comprises a first lock lowering instruction transmission sub-module configured to:
transmit the charging pile lock lowering instruction to the charging pile cloud server, wherein the charging pile cloud server is configured to perform a lock lowering operation on the target charging pile lock based on the charging pile lock lowering instruction.

12. The apparatus according to claim 11, wherein the charging pile cloud server is further configured to generate feedback information for the lock lowering operation, the feedback information comprises a target charging position of the target charging pile, and the apparatus further comprises:
a feedback information returning module configured to: receive the feedback information transmitted by the charging pile cloud server, and transmit the feedback information to the vehicle terminal, wherein the feedback information comprises lock lowering success information and lock lowering failure information, and the lock lowering success information informs a user of using the target charging pile on which the lock lowering operation has been performed at the target charging position for charging.

13. The apparatus according to claim 12, wherein the feedback information returning module further comprises:
a second available charging pile determination sub-module configured to determine, by the charging pile module, whether a second available charging pile exists in the charging pile region, when the feedback information is the lock lowering failure information; and
a second charging pile lock lowering instruction transmission sub-module configured to generate a charging pile lock lowering instruction for the found second available charging pile, and transmit the charging pile lock lowering instruction for the second available charging pile to the charging pile cloud server, until receiving lock lowering success information for the second available charging pile transmitted by the charging pile cloud server.

14. A vehicle, comprising the apparatus for controlling the charging pile lock according to any one of claims 8 to 13, a processor, a memory, and a computer program stored on the memory and executable on the processor, wherein the computer program, when executed by the processor, performs steps of the method for controlling the charging pile lock according to any one of claims 1 to 7.

15. A computer-readable storage medium having a computer program stored thereon, wherein the computer program, when executed by a processor, performs steps of the method for controlling the charging pile lock according to any one of claims 1 to 7.
